# FASCICULE DE BREVET EUROPEEN

(11) **EP 2 873 582 B1**
(45) Date de publication et mention de la délivrance du brevet: **29.04.2020**
(21) Numéro de dépôt: 14193352.3
(22) Date de dépôt: 14.11.2014
(51) Int. Cl.: B61D 23/00, G01S 17/88

(54) **Dispositif de commande d'un comble-lacune, véhicule comportant un tel dispositif et procédé de commande associé**
Steuervorrichtung eines Gap Fillers, Fahrzeug, das mit einer solchen Vorrichtung ausgestattet ist, und entsprechendes Steuerverfahren
Device for controlling a gap filler, vehicle comprising such a device and associated control method

(30) Priorité: 14.11.2013 FR 1361151
(43) Date de publication de la demande: 20.05.2015
(73) Titulaire: ALSTOM Transport Technologies, 93400 Saint-Ouen (FR)
(72) Inventeur: Bailly, Sébastien, 67110 Oberbronn (FR); Classen, Annegret, 59195 Herin (FR); Setan, Frédéric, 59269 Sepmeries (FR); Sauvage, Patrick, 83470 Saint Maximin La Sainte Baume (FR); Guiziou, François, 22950 Tregeux (FR)
(74) Mandataire: Lavoix

(56) Documents cités:
- EP-A1- 1 418 443
- EP-A1- 2 316 706
- EP-A1- 2 423 708
- WO-A1-98/58148
- WO-A1-2011/023602
- FR-A1- 2 942 195
- JP-A- 2011 016 432

## Description

La présente invention concerne un dispositif de commande d'un comble-lacune destiné à équiper une porte d'un véhicule ferroviaire, ledit dispositif de commande comportant :
- des moyens de détection d'un quai, propres à fournir des informations de détection, et
- des moyens de commande du déploiement du comble-lacune entre une position rétractée et une position déployée, en fonction desdites informations de détection.

On rappelle qu'un comble-lacune est un dispositif destiné, lorsqu'il est déployé, à s'étendre entre une plateforme du véhicule ferroviaire et un quai en face duquel le véhicule est à l'arrêt en tenant compte d'une lacune verticale et horizontale définie, pour faciliter le passage entre ladite plateforme et le quai, notamment pour des usagers à mobilité réduite.

On connaît déjà dans l'état de la technique, notamment d'après WO 98/58148, un dispositif de commande du déploiement d'un comble-lacune après la détection d'un quai par des capteurs sans contact.

Toutefois, un tel dispositif ne donne pas entière satisfaction. En effet, la détection du quai peut être entachée d'erreur, par exemple lorsqu'un objet ou un usager se trouve sur le quai, dans la zone couverte par les capteurs.

La présente invention a notamment pour but de remédier à cet inconvénient, en proposant un dispositif de commande dont la fiabilité est améliorée.

A cet effet, l'invention a notamment pour objet un dispositif de commande du type précité caractérisé en ce que les moyens de détection comportent :
- un émetteur d'ondes, destiné à être agencé au voisinage de la porte, propre à émettre des ondes dans au moins deux plans de détection d'une zone de détection et passant par l'émetteur d'ondes,
- un récepteur d'ondes, agencé pour recevoir, dans chaque plan de détection, des ondes émises par l'émetteur d'ondes et réfléchies par des contours d'objets présents dans ce plan de détection, et
- une unité de traitement, propre à définir, pour chaque plan de détection, au moins une image acquise correspondant aux contours ayant réfléchi les ondes reçues par le récepteur, les informations de détection étant fonction de chaque image acquise..

En effet, l'acquisition d'images dans une pluralité de plans verticaux distincts permet de réduire le risque d'erreurs de détection du quai et de garantir le respect de la lacune, ce qui a pour effet d'améliorer la fiabilité du dispositif.

Suivant des modes particuliers de réalisation, l'invention présente l'une ou plusieurs des caractéristiques suivantes, prise(s) isolément ou suivant toute combinaison techniquement possible :
- les plans sont sensiblement verticaux, concourants le long d'une même droite sensiblement verticale passant par l'émetteur d'ondes, chaque plan étant écarté angulairement d'un plan adjacent d'un angle inférieur à 5°, de préférence égal à 2° ;
- l'unité de traitement comporte des moyens de comparaison propres à comparer entre elles les différentes images acquises pour un même plan de détection à des instants différents, afin d'en déduire la présence d'objets mobiles dans la zone de détection ;
- l'unité de traitement comporte des moyens de génération d'images propres à calculer, à partir des images acquises, une image calculée d'une lacune et du quai dans un plan donné, de manière à éliminer des obstacles ne correspondant pas au quai ;
- l'unité de traitement comporte des moyens de reconnaissance de forme, propres à détecter la présence ou l'absence d'un quai depuis au moins une des images acquises ou depuis l'image calculée ;
- les moyens de commande sont configurés pour maintenir le comble-lacune dans une position rétractée et empêcher l'ouverture de la porte lorsqu'aucun quai n'est détecté ;
- les moyens de reconnaissance de forme sont propres à déterminer, à partir d'au moins une des images acquises ou à partir de l'image calculée, la position, dans un référentiel prédéterminé, du nez d'un quai détecté ;
- l'unité de traitement comporte des moyens pour comparer la position du nez de quai avec une zone cible prédéterminée, les moyens de commande étant configurés pour :
   - déployer le comble-lacune et amener une tranche externe libre de ce comble-lacune dans une position prédéterminée par rapport au nez du quai uniquement lorsque le nez du quai se trouve dans ladite zone cible prédéterminée, et
   - maintenir le comble-lacune dans sa position rétractée lorsque le nez du quai se trouve en dehors de ladite zone cible prédéterminée ;
- les moyens de détection comportent un unique émetteur d'ondes, de préférence un émetteur laser ;
- le dispositif comporte des moyens visuels et/ou sonores de signalisation de l'état de l'ouverture de la porte et/ou du déploiement du comble-lacune ;
- l'émetteur et le récepteur sont alignés selon une direction verticale.

L'invention a également pour objet un véhicule ferroviaire caractérisé en ce qu'il comporte un dispositif de commande tel que défini ci-dessus.

L'invention a enfin pour objet un procédé de détection pour un dispositif de commande tel que défini ci-dessus, caractérisé en ce qu'il comporte :
- une étape d'émission d'ondes par l'émetteur dans au moins deux plans de détection passant par l'émetteur d'ondes ;
- une étape de réception par le récepteur, dans chaque plan de détection, des ondes émises par l'émetteur d'ondes et réfléchies par des contours d'objets présents dans ce plan de détection ;
- une étape d'acquisition d'images par l'unité de traitement propre à convertir les ondes reçues par le récepteur dans chaque plan A, B, C, D, en au moins une image acquise;
- une étape de traitement par l'unité de traitement des images pour fournir des informations de détection ; et
- une étape de décision relative au déploiement du comble-lacune et/ou à l'ouverture de la porte en fonction des informations de détection.

Suivant d'autres caractéristiques de l'invention, le procédé comporte en outre l'étape suivante :
- une étape de génération d'image calculée par l'unité de traitement à partir desdites images acquises, et l'étape de traitement fournit des informations de détection à partir de l'image calculée.

L'invention sera mieux comprise à l'aide de la description qui va suivre, donnée uniquement à titre d'exemple et faite en se référant aux dessins annexés sur lesquels :
- la figure 1 est une vue en section selon un plan I-I orthogonal à un axe longitudinal d'un véhicule ferroviaire d'une scène comportant le véhicule ferroviaire et un quai faisant face à une porte du véhicule, ledit véhicule comprenant un dispositif de commande selon l'invention ;
- la figure 2 est un détail d'une vue de dessus de la scène de la figure 1 ;
- la figure 3 est une superposition d'images acquises par le dispositif de la figure 1 ;
- la figure 4 est une image dite image calculée, déduite des images acquises de la figure 3.

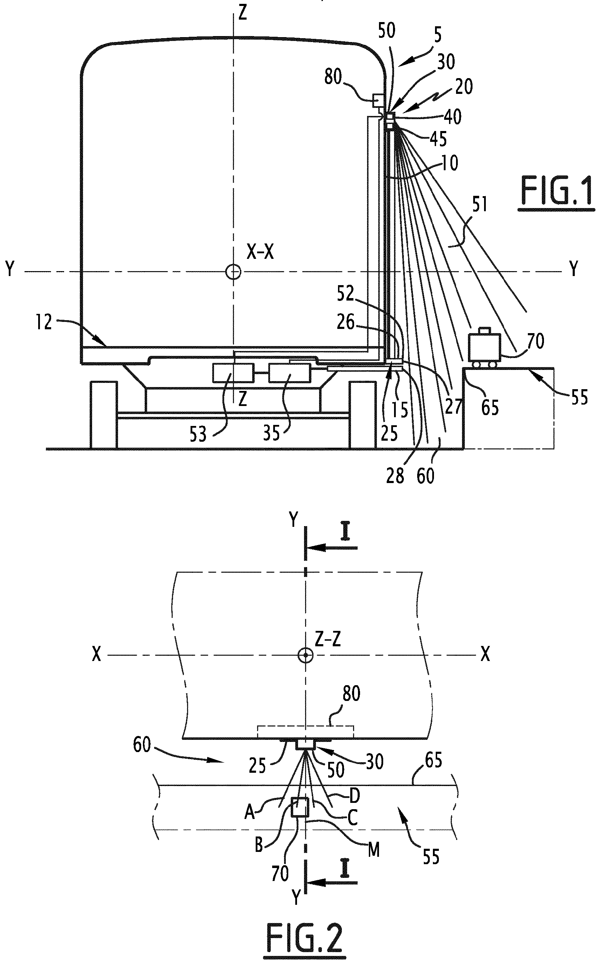

On a représenté, sur la figure 1, un véhicule ferroviaire 5 comportant au moins une porte 10 d'accès à une plateforme 12 du véhicule ferroviaire 5 et un comble-lacune 15 destiné à être déployé dans le prolongement de la plateforme 12. Le véhicule 5 comporte également un dispositif de commande 20 du comble-lacune 15.

De préférence, le véhicule 5 comporte, pour chaque porte 10, un élément fixe faisant saillie horizontalement vers l'extérieur de ce véhicule ferroviaire 5, par exemple un marchepied 25 situé en dessous de la porte 10. Le marchepied 25 comporte une face supérieure 26 et un bord externe 27 libre.

Le comble-lacune 15 est disposé sous la porte 10, par exemple disposé sous le marchepied 25.

Le comble-lacune 15 comporte une tranche externe 28 libre et il est propre à se déplacer horizontalement entre une position rétractée et une position déployée faisant saillie horizontalement vers l'extérieur du véhicule ferroviaire 5.

Le dispositif de commande 20 comprend des moyens de détection 30 d'un quai, propres à fournir des informations de détection, et des moyens de commande 35 du déploiement du comble-lacune 15 entre une position rétractée et une position déployée, en fonction desdites informations de détection.

Les moyens de détection 30 comportent un émetteur 40 et un récepteur 45. L'émetteur 40 et le récepteur 45 sont par exemple disposés à proximité l'un de l'autre dans un boîtier d'accueil 50 solidaire du véhicule ferroviaire 5 et fixé au-dessus de la porte 10, comme illustré par la figure 1. Par exemple, l'émetteur 40 et le récepteur 45 sont alignés selon une direction verticale Z-Z.

L'émetteur 40 est propre à émettre des ondes dans une zone de détection 51 de l'environnement extérieur du véhicule ferroviaire 5, de préférence des ondes lumineuses, avantageusement des faisceaux laser, par exemple des impulsions laser.

Pour faciliter la calibration du dispositif de commande 20, l'émetteur 40 comporte de préférence une unique source d'ondes, par exemple une unique source laser.

Par exemple, l'émetteur 40 comporte un mécanisme de déflection verticale (non représenté) pour émettre des ondes dans une pluralité de directions distinctes, séparées deux à deux par un angle de déflection verticale, passant par l'émetteur 40 et appartenant à un même plan vertical, comme cela est représenté sur la figure 1, ledit plan vertical formant par exemple un angle compris entre -10° et 10° avec le plan normal à un axe longitudinal X-X du véhicule ferroviaire 5.

Par ailleurs, l'émetteur 40 comporte par exemple un mécanisme de déflection horizontale (non représenté) pour émettre des ondes dans au moins deux plans verticaux distincts passant par l'émetteur 40, par exemple quatre plans verticaux distincts A, B, C, D, sécants selon un axe sensiblement vertical passant par l'émetteur 40, comme cela est représenté sur la figure 2. Chaque plan forme par exemple un angle de déflection horizontale de 2° avec chaque plan qui lui est adjacent.

De préférence, l'émetteur 40 est orienté pour qu'au moins un point 52 de la face supérieure 26 du marchepied 25 se trouve dans la zone de détection 51. Par exemple, le point 52 est le point du bord externe 27 du marchepied 25 appartenant à un plan I-I passant par l'émetteur 40 et orthogonal à un axe longitudinal X-X du véhicule ferroviaire 5.

Le récepteur 45 est adapté pour recevoir les ondes réfléchies par les objets présents dans la zone de détection 51. Plus particulièrement, le récepteur 45 reçoit de manière distincte des ondes réfléchies dans chacun des plans verticaux A, B, C, D.

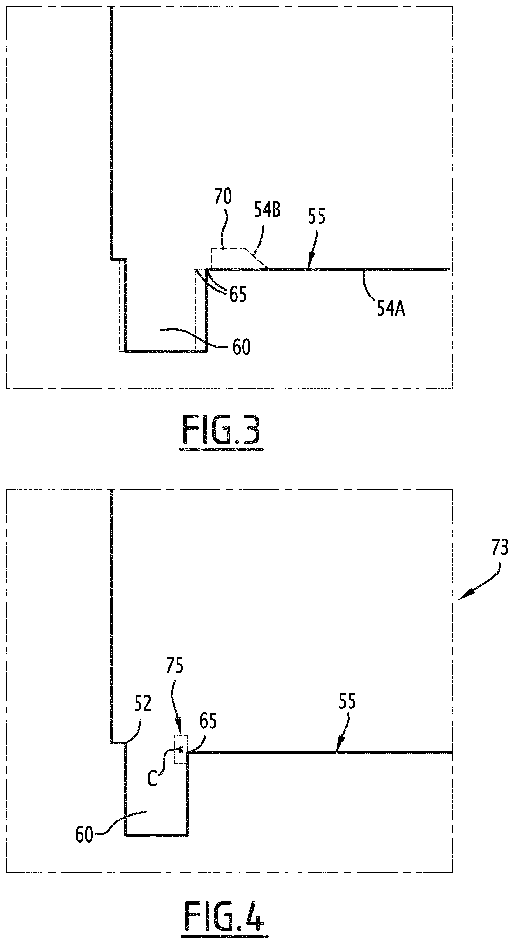

Par ailleurs, les moyens de détection 30 comportent également une unité de traitement 53 propre à convertir les ondes reçues par le récepteur 45 en au moins une image acquise par plan vertical, ladite image représentant schématiquement des contours d'objets présents dans la zone de détection 51, ayant réfléchi les ondes. Par exemple, on a représenté sur la figure 3 des images 54A, 54B superposées, correspondant aux plans A, B respectivement.

L'unité de traitement 53 est par exemple propre à mesurer, pour chaque onde émise par l'émetteur 40, la distance δ entre l'émetteur 40 et des contours des objets de la zone de détection 51 réfléchissant ladite onde émise par l'émetteur 40, puis à associer la distance δ et les angles de déflection horizontale et verticale correspondants à un point de la zone de détection 51.

De préférence, certaines distances δ mesurées, se trouvant en dehors d'un intervalle prédéterminé, ne sont pas représentées sur les images acquises, par exemple les mesures en dehors de l'intervalle compris entre 50 mm et 10 m.

L'unité de traitement 53 est également propre à traiter les images acquises pour déterminer la position d'objets présents dans la zone de détection 51, de préférence leur position relative par rapport à un point fixe du véhicule ferroviaire 5, par exemple le point 52 du marchepied 25.

Avantageusement, l'unité de traitement 53 convertit les ondes reçues par le récepteur 45 en une pluralité d'images acquise pour chaque plan vertical. Chaque image 54A, 54B acquise pour un plan vertical correspond aux ondes reçues par le récepteur 45 dans ce plan à un instant spécifique.

Ainsi, l'unité de traitement 53 comporte des moyens de comparaison propres à comparer entre elles les différentes images acquises pour un même plan vertical, chacune correspondant à un instant différent, afin d'en déduire la présence d'objets mobiles dans la zone de détection 51, notamment la présence de poussière ou de précipitations. En effet, un tel objet mobile ne se trouve pas au même endroit à des instants différents.

Les moyens de commande 35 sont propres à commander des moyens classiques (non représentés) d'actionnement du comble-lacune 15 de manière à amener le comble-lacune 15 dans une position prédéterminée à partir des informations de détection en provenance du module de détection 30.

Le fonctionnement du dispositif de commande 20 va maintenant être décrit.

Durant une première étape d'émission d'ondes, réalisée lorsque le véhicule ferroviaire 5 est immobile, la porte 10 étant verrouillée et faisant face à un quai 55 en définissant une lacune 60, l'émetteur 40 envoie des ondes dans la zone de détection 51, par exemple plusieurs impulsions lumineuses successives. Dans ce cas, une partie du quai 55, avantageusement le nez 65 du quai 55, est habituellement comprise dans la zone de détection 51.

Durant une étape suivante de réception d'ondes, une partie des ondes est renvoyée vers le récepteur 45 par la face supérieure 26 du marchepied 25. Les obstacles présents dans la zone de détection 51, par exemple le quai 55 ou un objet 70 disposé sur le quai 55, réfléchissent en partie les ondes émises par l'émetteur 40 vers le récepteur 45. Le récepteur 45 reçoit les ondes réfléchies par la face supérieure 26 du marchepied 25 et par les obstacles présents dans la zone de détection 51.

Durant une étape suivante d'acquisition d'images, l'unité de traitement 53 convertit les ondes reçues par le récepteur 45 dans chaque plan A, B, C, D, en au moins une image acquise dans chaque plan correspondant, et de préférence en plusieurs images acquises pour chaque plan, chaque image correspondant à un instant spécifique.

Les images acquises dans chaque plan sont comparées pour détecter et traiter les points ne correspondant pas au quai 55, tels que des points résultant de précipitations ou de poussières en suspension dans l'air durant le fonctionnement de l'émetteur 40. Par exemple, les moyens de détection 30 acquièrent plusieurs images par plan de détection, puis l'unité de traitement 53 compare ces images entre elles et, pour chaque angle de déflection verticale, conserve la distance δ la plus grande.

De manière préférée, une étape supplémentaire de génération d'images est mise en œuvre après l'étape d'acquisition d'images. Dans ce cas, l'unité de traitement 53 comporte des moyens de génération d'images propres à calculer, à partir des images acquises, une image calculée 73 de la lacune 60 et du quai 55 dans le plan I-I, comme illustré par la figure 4. Par exemple, chaque image acquise est projetée orthogonalement dans le plan I-I, puis la distance maximale mesurée pour un même angle de déflection horizontale dans plusieurs images acquises projetées est conservée, définissant ainsi ladite image calculée 73. Une telle opération permet, par exemple, d'éliminer des obstacles tels que l'objet 70, par exemple une valise ou un usager, du profil à traiter pour détecter plus facilement le nez 65 du quai 55, ce qui rend l'opération de détection plus fiable. En effet, un objet 70 ne se trouvant pas dans tous les plans de détection ne correspond pas au quai.

Durant une étape suivante de traitement, l'unité de traitement 53 détecte, dans au moins une des images acquises ou de manière préférée dans l'image calculée 73, le point 52 du marchepied 25 et le nez 65 du quai 55, et détermine la position du nez 65 dans un repère par exemple lié au point 52. A cet effet, des moyens de reconnaissance de forme, mettant en œuvre un algorithme de détection de forme, sont par exemple utilisés pour déterminer quel point de l'image acquise considérée ou de l'image calculée 73 correspond au nez 65 de quai.

La détection du quai 55, et la position du nez 65, forment des informations de détection qui seront utilisées pour décider si le comble-lacune 15 sera déployé.

En particulier, si au cours de cette étape, aucun quai n'est détecté, le comble-lacune 15 ne sera pas déployé.

Durant une étape suivante, lorsqu'un quai a été détecté, l'unité de traitement 53 détermine la position d'une zone cible 75 dans laquelle amener la tranche externe 28 du comble-lacune 15.

Par exemple, la zone cible 75 est un parallélépipède, dont la section dans le plan I-I est un rectangle, situé à l'extérieur du quai 55 et s'étendant verticalement dans le plan I-I, de centre C, de longueur par exemple comprise entre 50 et 70 mm, de largeur par exemple comprise entre 20 et 40 mm, et dont la distance entre le centre C et le nez 65 du quai 55 est égale à sa demi-largeur.

Durant une étape suivante de décision, l'unité de traitement 53 compare la course du comble-lacune 15 à la distance entre la tranche externe 28 du comble-lacune 15 et la zone cible 75.

Si la zone cible 75 est accessible par la tranche externe 28 du comble-lacune 15, c'est-à-dire que la distance qui les sépare quand le comble-lacune 15 est en position rétractée est inférieure à la course maximale dudit comble-lacune 15, les moyens de commande 35 actionnent les moyens de déploiement pour amener le comble-lacune 15 dans une position déployée telle que sa tranche externe 28 se trouve dans la zone cible 75.

Si la zone cible 75 n'est pas accessible par la tranche externe 28 du comble-lacune 15 ou qu'aucun quai n'a été détecté durant la quatrième étape, les moyens de commande 35 maintiennent le comble-lacune 15 en position rétractée et, de préférence, maintiennent la porte 10 verrouillée.

Par exemple, des moyens visuels et/ou sonores 80, visibles sur les figures 1 et 2, signalent l'état de l'ouverture de la porte 10 et/ou du déploiement du comble-lacune 15.

On notera que la présente invention n'est pas limitée au mode de réalisation décrit, mais pourrait présenter diverses variantes sans sortir du cadre des revendications.

Par exemple, dans un mode de réalisation (non représenté) d'un dispositif de commande selon l'invention, une plaque de réflexion est fixée au boîtier d'accueil 50 pour réfléchir, vers le récepteur 45, une partie des ondes émises par l'émetteur 40. L'analyse des ondes réfléchies par la plaque de réflexion permet de détecter des dérives, par exemple liées au déplacement de l'émetteur 40 ou du récepteur 45 dans le boîtier d'accueil 50.

Selon un autre mode de réalisation, les plans de détection ne sont pas tous verticaux. Par exemple, ils forment un angle avec le plan vertical I-I, ledit angle pouvant être constant (plans de détection parallèles) ou variable d'un plan de détection à l'autre, de même signe ou de signe opposé entre deux plans (plans en X).

## Revendications

1. Dispositif (20) de commande d'un comble-lacune (15) destiné à équiper une porte (10) d'un véhicule ferroviaire (5), ledit dispositif (20) de commande comportant :
- des moyens de détection (30) d'un quai (55), propres à fournir des informations de détection, et
- des moyens (35) de commande du déploiement du comble-lacune (15) entre une position rétractée et une position déployée, en fonction desdites informations de détection,
**caractérisé en ce que** les moyens de détection (30) comportent :
- un émetteur (40) d'ondes, destiné à être agencé au voisinage de la porte (10), propre à émettre des ondes dans au moins deux plans de détection (A, B, C, D) d'une zone de détection (51) et passant par l'émetteur (40) d'ondes,
- un récepteur (45) d'ondes, agencé pour recevoir, dans chaque plan de détection (A, B, C, D), des ondes émises par l'émetteur (40) d'ondes et réfléchies par des contours d'objets (26, 55, 70) présents dans ce plan de détection (A, B, C, D), et
- une unité de traitement (53), propre à définir, pour chaque plan de détection (A, B, C, D), au moins une image (54A, 54B) acquise correspondant aux contours ayant réfléchi les ondes reçues par le récepteur (45), les informations de détection étant fonction de chaque image (54A, 54B) acquise.

2. Dispositif (20) selon la revendication 1, **caractérisé en ce que** l'émetteur (40) comporte un mécanisme de déflection horizontale pour émettre des ondes dans au moins deux plans verticaux distincts passant par l'émetteur (40)

3. Dispositif (20) selon la revendication 1 ou 2, **caractérisé en ce que** lesdits plans (A, B, C, D) sont sensiblement verticaux, concourants le long d'une même droite sensiblement verticale passant par l'émetteur (40) d'ondes, chaque plan (A, B, C, D) étant écarté angulairement d'un plan (A, B, C, D) adjacent d'un angle inférieur à 5°, de préférence égal à 2°.

4. Dispositif (20) selon l'une quelconque des revendications 1 à 3, **caractérisé en ce que** l'unité de traitement (53) comporte des moyens de comparaison propres à comparer entre elles les différentes images (54A ; 54B) acquises pour un même plan de détection à des instants différents, afin d'en déduire la présence d'objets mobiles dans la zone de détection (51).

5. Dispositif (20) selon l'une quelconque des revendications précédentes, **caractérisé en ce que** l'unité de traitement (53) comporte des moyens de génération d'images propres à calculer, à partir des images (54A, 54B) acquises, une image calculée (73) d'une lacune (60) et du quai (55) dans un plan (I-I) donné, de manière à éliminer des obstacles (70) ne correspondant pas au quai (55).

6. Dispositif (20) selon l'une quelconque des revendications précédentes, **caractérisé en ce que** l'unité de traitement (53) comporte des moyens de reconnaissance de forme, propres à détecter la présence ou l'absence d'un quai (55) depuis au moins une des images (54A, 54B) acquises ou depuis l'image calculée (73).

7. Dispositif (20) selon la revendication 6, **caractérisé en ce que** les moyens (35) de commande sont configurés pour maintenir le comble-lacune (15) dans une position rétractée et empêcher l'ouverture de la porte (10) lorsqu'aucun quai (55) n'est détecté.

8. Dispositif (20) selon la revendication 6 ou 7, **caractérisé en ce que** les moyens de reconnaissance de forme sont propres à déterminer, à partir d'au moins une des images (54A, 54B) acquises ou à partir de l'image calculée (73), la position, dans un référentiel prédéterminé, du nez (65) d'un quai (55) détecté.

9. Dispositif (20) selon la revendication 8, **caractérisé en ce que** l'unité de traitement (53) comporte des moyens pour comparer la position du nez (65) de quai (55) avec une zone cible (75) prédéterminée, les moyens (35) de commande étant configurés pour :
- déployer le comble-lacune (15) et amener une tranche externe libre (28) de ce comble-lacune (15) dans une position prédéterminée par rapport au nez (65) du quai (55) uniquement lorsque le nez (65) du quai (55) se trouve dans ladite zone cible (75) prédéterminée, et
- maintenir le comble-lacune (15) dans sa position rétractée lorsque le nez (65) du quai (55) se trouve en dehors de ladite zone cible (75) prédéterminée.

10. Dispositif (20) selon l'une quelconque des revendications précédentes, **caractérisé en ce que** les moyens de détection (30) comportent un unique émetteur (40) d'ondes, de préférence un émetteur laser.

11. Dispositif (20) selon l'une quelconque des revendications précédentes, **caractérisé en ce qu'**il comporte des moyens (80) visuels et/ou sonores de signalisation de l'état de l'ouverture de la porte (10) et/ou du déploiement du comble-lacune (15).

12. Dispositif (20) selon l'une quelconque des revendications précédentes, **caractérisé en ce que** l'émetteur (40) et le récepteur (45) sont alignés selon une direction verticale.

13. Véhicule ferroviaire (5) **caractérisé en ce qu'**il comporte un dispositif (20) de commande selon l'une quelconque des revendications 1 à 12.

14. Procédé de détection pour un dispositif (20) de commande selon l'une quelconque des revendications 1 à 12, **caractérisé en ce qu'**il comporte :
- une étape d'émission d'ondes par l'émetteur (40) dans au moins deux plans (A, B, C, D) de détection passant par l'émetteur (40) d'ondes ;
- une étape de réception par le récepteur (45), dans chaque plan (A, B, C, D) de détection, des ondes émises par l'émetteur (40) d'ondes et réfléchies par des contours d'objets (26, 55, 70) présents dans ce plan (A, B, C, D) de détection ;
- une étape d'acquisition d'images par l'unité de traitement (53) propre à convertir les ondes reçues par le récepteur (45) dans chaque plan A, B, C, D, en au moins une image acquise;
- une étape de traitement par l'unité de traitement (53) des images pour fournir des informations de détection ; et
- une étape de décision relative au déploiement du comble-lacune (15) et/ou à l'ouverture de la porte (10) en fonction des informations de détection.

15. Procédé de détection pour un dispositif (20) de commande selon la revendication 14, **caractérisé en ce qu'**il comporte, en outre, une étape de génération d'image calculée par l'unité de traitement (53) à partir desdites images (54A, 54B) acquises, et **en ce que** l'étape de traitement fournit des informations de détection à partir de l'image calculée (73).

## Patentansprüche

1. Vorrichtung (20) zum Steuern einer Ausfahrbrücke (15), die vorgesehen ist, eine für (10) eines Schienenfahrzeug (5) auszurüsten, wobei die Steuervorrichtung (20) umfasst:
- Mittel (30) zum Detektieren eines Bahnsteigs (55), die geeignet sind, Detektionsinformationen zu liefern und
- Mittel (35) zum Steuern des Ausfahrens der Ausfahrbrücke (15) zwischen einer zurückgezogenen Stellung und einer ausgefahrenen Stellung abhängig von den Detektionsinformationen,
**dadurch gekennzeichnet, dass** die Detektionsmittel (30) umfassen:
- einen Sender (40) von Wellen, der vorgesehen ist, in der Nähe der Tür (10) angeordnet zu sein und geeignet ist, Wellen in mindestens zwei durch den Sender (40) von Wellen hindurchgehenden Detektionsebenen (A, B, C, D) einer Detektionszone (51) auszusenden,
- einen Empfänger (45) von Wellen, der angeordnet ist, in jeder Detektionsebene (A, B, C, D) von dem Sender (40) von Wellen gesendete und durch Konturen von Objekten (26, 55, 70), die in dieser Detektionsebene (A, B, C, D) vorhanden sind, reflektierten Wellen zu empfangen, und
- eine Verarbeitungseinheit (53), die geeignet ist, für jede Detektionsebene (A, B, C, D) mindestens ein erworbenes Bild (54A, 54B) zu definieren, das den Konturen, an denen die von dem Empfänger (45) empfangenen Wellen reflektiert wurden, entspricht, wobei die Detektionsinformationen eine Funktionen jedes erworbenen Bildes (54A, 54B) sind.

2. Vorrichtung (20) nach Anspruch 1, **dadurch gekennzeichnet, dass** der Sender (40) einen Mechanismus zur horizontalen Auslenkung aufweist, um Wellen in mindestens zwei unterschiedlichen, durch den Sender (40) hindurchgehenden vertikalen Ebenen auszusenden.

3. Vorrichtung (20) nach Anspruch 1 oder 2, **dadurch gekennzeichnet, dass** die Ebenen (A, B, C, D) im Wesentlichen vertikal und entlang einer selben im Wesentlichen vertikalen und durch den Sender (40) von Wellen hindurchgehenden Geraden konvergierend sind, wobei jede Ebene (A, B, C, D) winkelmäßig von einer benachbarten Ebene (A, B, C, D) um einen Winkel kleiner als 5°, vorzugsweise gleich 2° beabstandet ist.

4. Vorrichtung (20) nach einem beliebigen der Ansprüche 1 bis 3, **dadurch gekennzeichnet, dass** die Verarbeitungseinheit (53) Vergleichsmittel aufweist, die geeignet sind, die verschiedenen für eine selbe Detektionsebene bei unterschiedlichen Zeitpunkten erworbenen Bilder (54A; 54B) untereinander zu vergleichen, um daraus das Vorhandensein von beweglichen Objekten in der Detektionszone (51) herzuleiten.

5. Vorrichtung (20) nach einem beliebigen der vorhergehenden Ansprüche, **dadurch gekennzeichnet, dass** die Verarbeitungseinheit (53) Mittel zum Erzeugen von Bildern aufweist, die geeignet sind, aus den erworbenen Bildern (54A, 54B) ein berechnetes Bild (73) einer Lücke (60) und des Bahnsteigs (55) in einer gegebenen Ebene (I-I) zu berechnen, um Hindernisse (70), die nicht einem Bahnsteig (55) entsprechen, zu eliminieren.

6. Vorrichtung (20) nach einem beliebigen der vorhergehenden Ansprüche, **dadurch gekennzeichnet, dass** die Verarbeitungseinheit (53) Mittel zur Erkennung von Formen aufweist, die geeignet sind, das Vorhandensein oder Nichtvorhandensein eines Bahnsteigs (55) aus mindestens einem der erworbenen Bilder (54A, 54B) oder aus dem berechneten Bild (73) zu detektieren.

7. Vorrichtung (20) nach Anspruch 6, **dadurch gekennzeichnet, dass** die Steuermittel (35) ausgebildet sind, die Ausfahrbrücke in einer zurückgezogenen Stellung zu halten und das Öffnen der Tür (10) zu verhindern, wenn kein Bahnsteig (55) detektiert wird.

8. Vorrichtung (20) nach Anspruch 6 oder 7, **dadurch gekennzeichnet, dass** die Mittel zur Erkennung von Formen geeignet sind, aus mindestens einem der erworbenen Bilder (54A, 54B) oder aus dem berechneten Bild (73) in einem vorbestimmten Koordinatensystem die Kante (65) des detektierten Bahnsteigs (55) zu bestimmen.

9. Vorrichtung (20) nach Anspruch 8, **dadurch gekennzeichnet, dass** die Verarbeitungseinheit (53) Mittel zum Vergleichen der Position der Kante (65) des Bahnsteigs (55) mit einer vorbestimmten Zielzone aufweist, wobei die Steuermittel (35) ausgebildet sind:
- die Ausfahrbrücke (15) auszufahren und einen freien äußeren Teilabschnitt (28) dieser Ausfahrbrücke (15) in eine vorbestimmten Position in Bezug auf die Kante (65) des Bahnsteigs (55) nur, wenn die Kante (65) des Bahnsteigs (55) sich in der vorbestimmten Zielzone (75) befindet, zu bringen und
- die Ausfahrbrücke (55) in ihrer zurückgezogenen Stellung beizubehalten, wenn die Kante (65) des Bahnsteigs (55) sich außerhalb der vorbestimmten Zielzone (75) befindet.

10. Vorrichtung (20) nach einem beliebigen der vorhergehenden Ansprüche, **dadurch gekennzeichnet, dass** die Detektionsmittel (30) einen einzigen Sender (40) von Wellen, vorzugsweise einen Lasersender aufweisen.

11. Vorrichtung (20) nach einem beliebigen der vorhergehenden Ansprüche, **dadurch gekennzeichnet, dass** sie visuelle oder akustische Mittel (80) zur Signalisierung des Zustandes der Öffnung der Tür (10) und/oder des Ausfahrens der Ausfahrbrücke (15) aufweist.

12. Vorrichtung (20) nach einem beliebigen der vorhergehenden Ansprüche, **dadurch gekennzeichnet, dass** der Sender (40) und der Empfänger (45) gemäß einer senkrechten Richtung ausgerichtet sind.

13. Schienenfahrzeug (5) **dadurch gekennzeichnet, dass** es eine Steuervorrichtung (20) nach einem beliebigen der Ansprüche 1 bis 12 aufweist.

14. Detektionsverfahren für eine Steuervorrichtung (20) nach einem beliebigen der Ansprüche 1 bis 12, **dadurch gekennzeichnet, dass** es umfasst:
- einen Schritt des Aussendens von Wellen durch den Sender (40) in mindestens zwei Detektionsebenen (A, B, C, D), die durch den Sender (40) von Wellen hindurchgehen;
- einen Schritt des Empfangens von in jeder Detektionsebene (A, B, C, D) von dem Sender (40) von Wellen gesendeten und durch Konturen von Objekten (26, 55, 70), die in dieser Detektionsebene (A, B, C, D) vorhanden sind, reflektierten Wellen durch den Empfänger (45);
- einen Schritt des Beschaffens von Bildern durch die Verarbeitungseinheit (53), der geeignet ist, die von dem Empfänger in jeder Ebene A, B, C, D empfangenen Wellen in mindestens ein erworbenes Bild umzuwandeln;
- einen Schritt des Verarbeitens der Bilder durch die Verarbeitungseinheit (53), um Detektionsinformationen zu liefern; und
- einen Schritt des Entscheidens hinsichtlich des Ausfahrens der Ausfahrbrücke (15) und/oder der Öffnung der Tür (10) abhängig von den Detektionsinformationen.

15. Detektionsverfahren für eine Steuervorrichtung (20) nach Anspruch 14, **dadurch gekennzeichnet, dass** es außerdem einen Schritt des Erzeugens eines von der Verarbeitungseinheit (53) aus den erworbenen Bildern (54A, 54B) berechneten Bildes und dass der Schritt des Verarbeitens Detektionsinformationen aus dem berechneten Bild (73) liefert.

## Claims

1. Device (20) for controlling a gap filler (15) with which a door (10) of a railway vehicle (5) is to be equipped, said control device (20) comprising:
- detection means (30) for detecting a platform (55), which means are capable of providing detection information, and
- means (35) for controlling the deployment of the gap filler (15) between a retracted position and a deployed position according to said detection information, **characterised in that** the detection means (30) comprise:
- a wave transmitter (40) which is to be arranged in the vicinity of the door (10) and is capable of transmitting waves in at least two detection planes (A, B, C, D) of a detection zone (51) which pass through the wave transmitter (40),
- a wave receiver (45) arranged to receive, in each detection plane (A, B, C, D), waves transmitted by the wave transmitter (40) and reflected by contours of objects (26, 55, 70) present **in that** detection plane (A, B, C, D), and
- a processing unit (53) capable of defining, for each detection plane (A, B, C, D), at least one acquired image (54A, 54B) corresponding to the contours that have reflected the waves received by the receiver (45), the detection information being a function of each acquired image (54A, 54B).

2. Device (20) according to claim 1, **characterised in that** the transmitter (40) comprises a horizontal deflection mechanism for transmitting waves in at least two distinct vertical planes passing through the transmitter (40).

3. Device (20) according to claim 1 or 2, **characterised in that** said planes (A, B, C, D) are substantially vertical, converging along the same substantially vertical straight line passing through the wave transmitter (40), each plane (A, B, C, D) being angularly spaced apart from an adjacent plane (A, B, C, D) by an angle of less than 5°, preferably equal to 2°.

4. Device (20) according to any one of claims 1 to 3, **characterised in that** the processing unit (53) comprises comparison means capable of comparing the different images (54A; 54B) acquired for the same detection plane at different times in order to deduce therefrom the presence of moving objects in the detection zone (51).

5. Device (20) according to any one of the preceding claims, **characterised in that** the processing unit (53) comprises image generating means capable of computing, from the acquired images (54A, 54B), a computed image (73) of a gap (60) and of the platform (55) in a given plane (I-I) so as to eliminate obstacles (70) that do not correspond to the platform (55).

6. Device (20) according to any one of the preceding claims, **characterised in that** the processing unit (53) comprises shape recognition means capable of detecting the presence or absence of a platform (55) from at least one of the acquired images (54A, 54B) or from the computed image (73).

7. Device (20) according to claim 6, **characterised in that** the control means (35) are configured to keep the gap filler (15) in a retracted position and prevent the door (10) from opening when a platform (55) is not detected.

8. Device (20) according to claim 6 or 7, **characterised in that** the shape recognition means are capable of determining, from at least one of the acquired images (54A, 54B) or from the computed image (73), the position, in a predetermined reference frame, of the edge (65) of a detected platform (55).

9. Device (20) according to claim 8, **characterised in that** the processing unit (53) comprises means for comparing the position of the edge (65) of the platform (55) with a predetermined target zone (75), the control means (35) being configured to:
- deploy the gap filler (15) and bring a free external portion (28) of the gap filler (15) into a predetermined position relative to the edge (65) of the platform (55) only when the edge (65) of the platform (55) is in said predetermined target zone (75), and
- keep the gap filler (15) in its retracted position when the edge (65) of the platform (55) is outside said predetermined target zone (75).

10. Device (20) according to any one of the preceding claims, **characterised in that** the detection means (30) comprise a single wave transmitter (40), preferably a laser transmitter.

11. Device (20) according to any one of the preceding claims, **characterised in that** it comprises visual and/or acoustic means (80) for signalling the state of opening of the door (10) and/or of deployment of the gap filler (15).

12. Device (20) according to any one of the preceding claims, **characterised in that** the transmitter (40) and the receiver (45) are aligned in a vertical direction.

13. Railway vehicle (5), **characterised in that** it comprises a control device (20) according to any one of claims 1 to 12.

14. Detection method for a control device (20) according to any one of claims 1 to 12, **characterised in that** it comprises:
- a step of transmission of waves by the transmitter (40) in at least two planes (A, B, C, D) which pass through the wave transmitter (40);
- a step of reception by the receiver (45), in each detection plane (A, B, C, D), of the waves transmitted by the wave transmitter (40) and reflected by contours of objects (26, 55, 70) present **in that** detection plane (A, B, C, D);
- a step of acquisition of images by the processing unit (53) capable of converting the waves received by the receiver (45) in each plane A, B, C, D into at least one acquired image;
- a step of processing of the images by the processing unit (53) in order to provide detection information; and
- a decision step relating to the deployment of the gap filler (15) and/or to the opening of the door (10) according to the detection information.

15. Detection method for a control device (20) according to claim 14, **characterised in that** it further comprises a step of generation of a computed image by the processing unit (53) from said acquired images (54A, 54B), and **in that** the processing step provides detection information from the computed image (73).
